# EUROPEAN PATENT APPLICATION

(11) **EP 2 361 738 A1**
(43) Date of publication of application: **31.08.2011**
(21) Application number: 11155923.3
(22) Date of filing: 25.02.2011
(51) Int. Cl.: B27M 3/08, B23Q 7/04, B27M 1/08, B27F 1/02, E06B 3/10, B27C 9/04

(54) **Operating unit for a machining centre**

(30) Priority: 25.02.2010 IT MO20100042
(71) Applicant: SCM Group S.p.A., 47900 Rimini (IT)
(72) Inventor: Maioli, Fabio, 47822, Santarcangelo di Romagna (RN) (IT)
(74) Representative: Villanova, Massimo

(57) **Abstract**

In a numerically controlled multifunction machining centre for producing wooden casings, an operating unit (2) comprises a disk type milling cutter (7), for forming a glass stop of a frame for windows, and further comprises a gripper (8) for grasping the listel and placing the listel in a magazine.

## Description

### Background of the invention

The invention relates to an operating unit for a machining centre, in particular for producing door and window frames made of wood or of a material that is similar to wood. Specifically, but not exclusively, the operating unit can be used in a numerically controlled machining centre.

The prior art comprises machines for machining wooden door and window frames having an operating unit suitable for forming glass stops, i.e. strips or small bars of wood that are applied to the edges of the sheet of glass of the door or window frame to fix the sheet to the frame.

Machining (at least by milling) the sides of the frame of a glass window or door is known to obtain a groove that will form the seat for housing the edge of the sheet of glass. The side is generally milled further to generate, from a portion of material that bounds the seat of the sheet, the listel that will be subsequently fixed to the element to lock the sheet in the seat. The listel is formed from the side of the frame also for aesthetic reasons, in order that the listel has the same appearance (for example tone of colour, grain of the wood, etc) as the rest of the frame.

One of the problems of the prior art consists of recovering the listel obtained by milling and depositing the listel in a zone where it will be possible to recover the listel and fix the listel to the frame from which it originates.

Performing such operations manually is known, with the drawback of the inevitable arrest of the machining process. Obviously, the machine downtime increases costs and lengthens machining time.

The problem of ensuring that the listel detached from a side of the window or door frame is subsequently applied to the same side from which it was detached is solved, in the prior art, by fixing the listel to the original side removably immediately after detachment of the listel. Fixing generally occurs by means of riveting with a series of staples, which not only entails additional stapling and thus destapling operations, but also the operation of covering the holes created by the staples.

### Summary of the invention

One object of the invention is to solve the aforesaid problem of the prior art.

One advantage of the invention is to increase the speed at which the door and window frames are machined and to minimise the need for machine downtime.

Another advantage consists of reducing operations performed manually by an operator.

Still another advantage is to provide an operating unit and a machining centre that are constructionally cheap and simple. A further advantage is to enables good-quality door and window frames to be made.

Such objects and advantages and yet others are all achieved by the operating unit and/or by the machining centre and/or by the control method according to one or more of the claims set out below.

### Brief description of the drawings

The invention can be better understood and implemented with reference to the attached drawings that illustrate an embodiment thereof by way of non-limiting example.

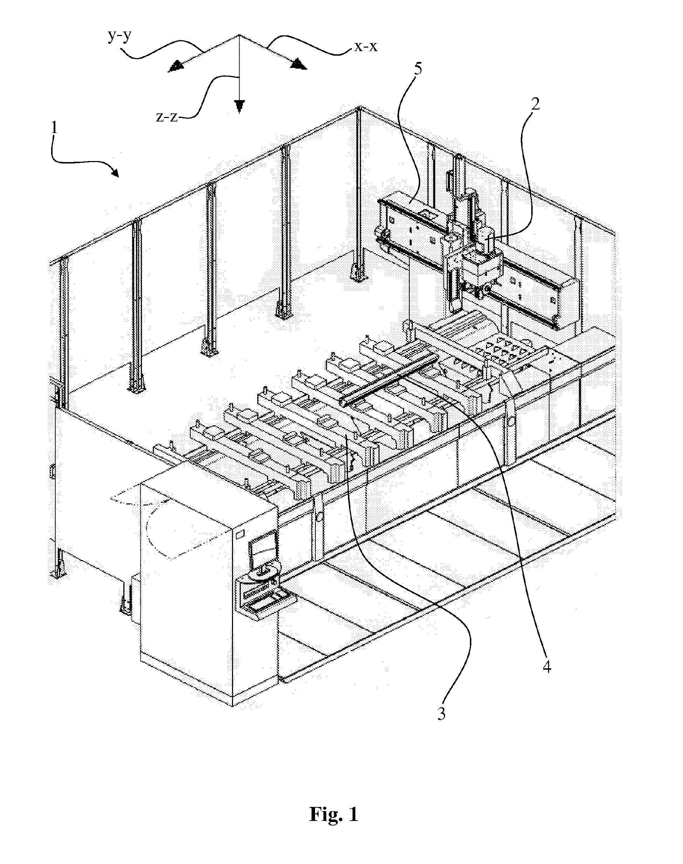

Figure 1 is a view of an example of a machining centre made according to the invention.
Figure 2 is an enlargement of figure 1 in a different operating condition.
Figure 3 is a vertical raised side view of a detail of figure 2.

### Detailed description

With reference to the aforesaid figures, with 1 a numerically controlled multifunction machining centre for machining workpieces made of wood or a material similar to wood has been indicated. The machining centre 1 can be, as in the specific case, of the 'flow type', having an inlet and an outlet for the workpiece.

The machining centre is set up, in particular, for producing frames for doors and windows made of wood or similar material.

The machining centre 1 comprises at least one operating unit 2 that is movable according to one or more machining axes. The operating unit 2 can be configured for performing several operations, for example for milling, for drilling, etc by means of using various possibly interchangeable tools.

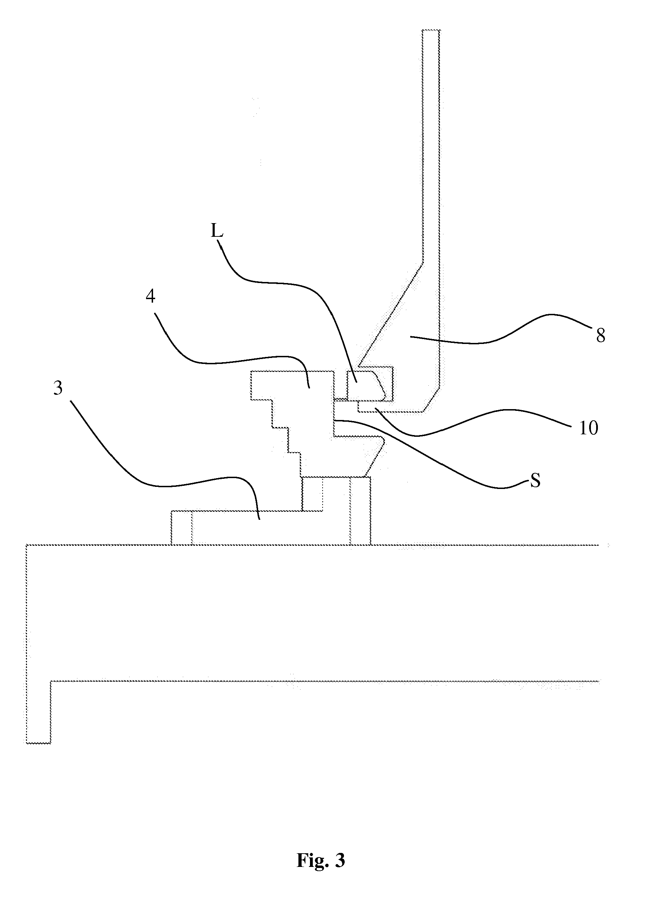

The numerically controlled machining centre 1 comprises a (horizontal) work surface 3 configured (in a known manner) for supporting a workpiece 4. In the specific case the workpiece comprises a frame element such as for example a side of a frame for a glass window or door intended for holding a sheet of glass. This frame element is a rod (with an elongated shape according to a longitudinal axis) that is machined (in a known manner) to form (for example by milling) at least one longitudinal groove (indicated with S in figure 3) intended to form the housing seat of an edge of the sheet of glass.

The machining centre 1 further comprises a supporting equipment 5 set up for moving the operating unit 2. The supporting equipment 5 has at least one supporting element to which the operating unit 2 is fixed and which is provided with the possibility of performing movements above the work surface 3 along at least one first movement axis z-z transverse to the work surface 3 and along at least one second movement axis y-y that is parallel to the work surface 3.

In the specific case, in which the work surface 3 is horizontal, the first movement axis z-z (of the operating unit 2) is vertical and the second movement axis y-y is horizontal and is parallel to the longitudinal axis of the workpiece 4 (rod) being machined.

The supporting equipment 5 is further configured in such a manner as to be able to move the operating unit 2 along a third movement axis x-x that is horizontal and parallel to the second axis y-y.

The operating unit 2 is suitable for machining workpieces made of wood or of material similar to wood. It comprises a toolholder support 6 and, between the various possible tools, at least one milling tool carried by the toolholder support 6 and having at least one disk type milling cutter 7 which is able to rotate around a rotation axis that is perpendicular to the second movement axis y-y and is parallel to the third movement axis x-x.

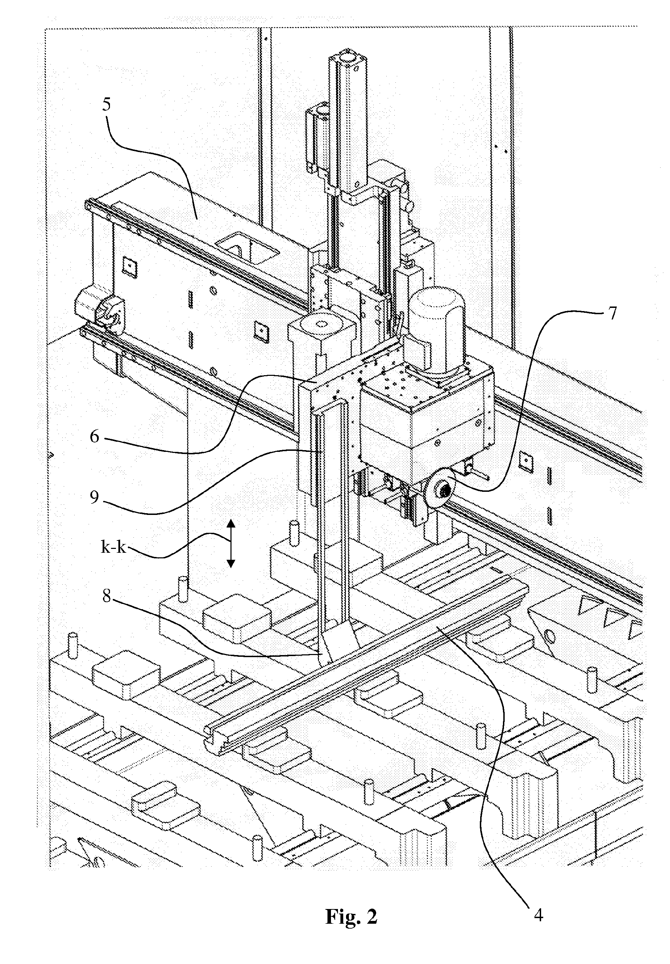

The disk type milling cutter 7 is configured, in a known manner, to form a glass stop (indicated with L in figures 2 and 3) in a frame element for doors or windows. In particular, the disk type milling cutter 7 is set up for forming the listel from a longitudinal portion of material that bounds a side of the groove S that will form the seat of the sheet of glass.

The operating unit 2 further comprises a grasping tool carried by the toolholder support 6 and having at least a gripper 8 configured for grasping the glass stop L.

The grasping tool and the milling tool have the possibility of performing a relative movement one with respect to the other on the toolholder support 6 along at least one relative movement direction k-k. In the specific case, in which the rotation axis of the disk type milling cutter 7 is horizontal, the relative movement direction k-k is vertical. In the specific case the grasping tool is slidably coupled with the toolholder support 6 along a rectilinear guide 9 that is parallel to the relative movement direction k-k.

The gripper 8 comprises at least one jaw element 10 that is movable in a grasping direction that is parallel to the direction k-k (vertical in the case in point).

The operating unit 2 will also be provided with the driving means of the various tools. For example there will be at least one actuator (for example an electric motor) for rotating the disk type milling cutter 7. There will then be an actuator (for example a pneumatic cylinder) for driving the grasping tool (for example for the grasping movement of the jaw element 10 and/or for the movement k-k of the gripper 8 along the guide 9).

The machining centre 1 will then be provided with a electronic control unit which is programmed for the operation of the machining centre according to a preset control method that, in the specific case, may comprise a preliminary step of identifying the position of the workpiece 4 placed previously (in a known manner, for example manually or by means of a conveyor) on the work surface 3. This preliminary identification step is conducted in a substantially known manner.

The control unit will then control the milling tool to form a glass stop L on the workpiece (for example a frame element for doors or windows such as a side, in the shape of a rod, of a frame for windows) by milling to a set depth, performed by the disk type milling cutter 7, in such a manner as to leave the glass stop L attached to the workpiece by means of a non-milled portion of material (which is relatively thin and is visible in figure 3). This portion of non-milled material is shaped in such a manner as to be easily breakable. In figure 3 it is noted that this portion, which is overall much thinner than the thickness of the listel L, is relatively thicker in the central zone and thinner on the edges attached to the rest of the material (the listel L and the rest of the workpiece 4), to facilitate the subsequent breaking thereof; this conformation is achievable by a disk type milling cutter having the peripheral blade shaped in such a manner as to have two side edges protruding radially from the milling zone; this milling zone will have a central zone of lesser diameter than the two aforesaid side edges. During milling there will be a relative working movement between the milling unit and the workpiece in the direction y-y, with known methods that will not be explained in detail. After the glass stop L has been formed by milling, the control unit will control the grasping tool to grip the glass stop L by means of the gripper, and to detach the glass stop L from the workpiece by breaking the (thin) non-milled portion of the material.

In this step of removing the listel L, the control unit can control the movement of the supporting equipment 5 both in the step of moving the grasping tool towards the workpiece (to enable the listel L to be grasped) and during the step of moving the grasping tool away from the workpiece (to enable the listel L to be detached and stored). This removal step can also comprise a movement of the grasping tool in relation to the milling tool along the guide 9 on the toolholder support 6.

After the glass stop L has been grasped and detached, it is placed in a (known and not illustrated) listel magazine.

The control unit is set up for storing the data identifying the glass stop in such a way as to enable the glass stop to be recognised subsequently, i.e. when the listel L has to be fixed (in a known manner) to the same frame element from which it has been formed. The step of storing the data identifying the listel L may comprise, for example, reading an identification code (for example a bar code) carried by the glass stop L. The identification code can be applied before forming of the listel (on workpiece in the zone intended for forming the listel) or after forming in the listel.

As said, the step of placing the ready-formed glass stop L in the listel magazine may comprise the operation of moving the entire operating unit 2 carried by the supporting equipment 5, and/or the operation of moving the grasping tool with respect to the milling tool on the toolholder support 6 (along the guide 9), in such a manner as to move the grasping tool, and the listel L carried thereby, away from the workpiece.

As can be seen, forming and storing the glass stop does not entail the need for any machine downtime, or manual interventions of an operator. Further, the various operations for forming and storing the listel can be carried out by using the movement axes of a supporting equipment already present in a machining centre of known type. The machining centre will be provided with a special operating unit provided with a grasping tool as, for example, the one disclosed above, and a control unit programmed for running the control method, such as, for example, the one disclosed above.

In the specific case the grasping tool is of the gripper type, although, in other non-illustrated embodiments, it is possible to provide other types of grasping element, such as, for example, the grasping element of pneumatic type (by means of one or more suction cups).

## Claims

1. Operating unit (2) for machining workpieces made of wood or of a material similar to wood, the operating unit comprising:
a. a toolholder support (6);
b. a milling tool carried by said toolholder support (6), said milling tool being configured for forming a glass stop (L) in a door and window element;
c. a grasping tool carried by said toolholder support (6), said grasping tool being configured for grasping a glass stop (L).

2. Operating unit according to claim 1, wherein said grasping tool and said milling tool are configured in such a manner that it is possible to perform a relative movement in relation to one another on said toolholder support (6) along at least one relative movement direction (k-k); said grasping tool being slidably coupled with said toolholder support (6) along a rectilinear guide (9) parallel to said relative movement direction (k-k); said milling tool comprising at least one disk type milling cutter (7) that has the possibility of rotating around a rotation axis; said relative movement direction (k-k) being transverse to said rotation axis; said grasping tool comprising a gripper (8) configured for clamping a glass stop (L); said gripper (8) comprising at least one jaw element (10) movable, for clamping the listel, in a grasping direction having at least one motion component parallel to said relative movement direction (k-k).

3. Operating unit according to claim 1, wherein said grasping tool and said milling tool are configured in such a manner that it is possible to perform a relative movement in relation to one another on said toolholder support (6) along at least one relative movement direction (k-k).

4. Operating unit according to claim 3, wherein said grasping tool is slidably coupled with said toolholder support (6) along a rectilinear guide (9) parallel to said relative movement direction (k-k).

5. Operating unit according to claim 3 or 4, wherein said milling tool comprises at least one disk type milling cutter (7) that has the possibility of rotating around a rotation axis, and wherein said relative movement direction (k-k) is transverse to said rotation axis.

6. Operating unit according to any preceding claim, wherein said grasping tool comprises a gripper (8) configured for clamping a glass stop (L).

7. Numerically controlled machining centre (1), for machining workpieces made of wood or of a material similar to wood, comprising:
a. a work surface (3) configured for supporting a workpiece (4);
b. a supporting equipment (5) having at least one supporting element having the possibility of performing movements above said work surface (3) along at least one first movement axis (z-z) that is transverse to said work surface, and along at least one second movement axis (y-y) that is parallel to said work surface;
c. an operating unit (2) carried by said supporting element and made according to any preceding claim.

8. Machining centre according to claim 7, wherein said work surface (3) is horizontal, said first movement axis (z-z) is vertical and said second movement axis (y-y) is horizontal; said supporting element having the possibility of performing movements along a third movement axis (x-x) horizontal and perpendicular to said second movement axis (y-y).

9. Control method of a machining centre according to claim 7 or 8, said method comprising the steps of:
a. identifying the position of a workpiece (4) previously located on said work surface (3), said workpiece comprising at least one door and window element;
b. controlling said milling tool to form a glass stop (L) in said workpiece by a milling of a preset depth so as to leave the glass stop attached to the workpiece by a portion of non-milled material, said portion of non-milled material being breakable;
c. controlling said grasping tool to grasp said glass stop (L) and to detach said glass stop (L) from the workpiece (4) by breaking said portion of non-milled material.

10. Method according to claim 9, wherein said step of controlling said grasping tool to grasp the glass stop (L) comprises moving said supporting element, and/or moving said grasping tool in relation to said milling tool on said toolholder support (6), to move said grasping tool towards said workpiece (4).

11. Method according to claim 9 o 10, comprising the steps of positioning the glass stop (L) in a listel magazine and of storing data identifying said glass stop for subsequent recognition thereof.

12. Method according to claim 11, wherein said step of storing identifying data comprises reading an identifying code carried by said glass stop (L).

13. Method according to claim 11 o 12, wherein said step of positioning the glass stop (L) in a listel magazine comprises moving said supporting element, and/or moving said grasping tool in relation to said milling tool on said toolholder support (6), to move said grasping tool away from said workpiece (4).
